# EUROPÄISCHE PATENTANMELDUNG

(11) **EP 3 053 725 A1**
(43) Veröffentlichungstag der Anmeldung: **10.08.2016**
(21) Anmeldenummer: 15154095.2
(22) Anmeldetag: 06.02.2015
(51) Int. Cl.: B29C 47/76, B29C 47/92, B29C 47/00, B29C 47/08, B29C 47/38, B29K 21/00

(54) **Stopfschnecke**

(71) Anmelder: LANXESS Deutschland GmbH, 50569 Köln (DE)
(72) Erfinder: Kirchhoff, Jörg, 51061 Köln (DE); König, Thomas, 51371 Leverkusen (DE); Bierdel, Michael, 51373 Leverkusen (DE)

(57) **Zusammenfassung**

Eine Stopfschnecke (2) zur Verwendung in einem Extrudersystem umfasst ein Gehäuse (7) sowie zumindest eine drehbar innerhalb des Gehäuses (7) gelagerte Förderschnecke (5), wobei zwischen einer Innenseite des Gehäuses (7) und der Förderschnecke (5) ein Förderraum ausgebildet ist. Die Stopfschnecke (2) ist dadurch gekennzeichnet, dass die Innenseite des Gehäuses (7) zumindest in einem Abschnitt mit einer oder mehreren Vertiefungen, insbesondere in Form einer Nut (13) versehen ist.

## Beschreibung

Die Erfindung betrifft eine Stopfschnecke für ein Extrudersystem, sowie ein eine solche Stopfschnecke aufweisendes Extrudersystem.

Extruder dienen der Herstellung von Strängen aus formbaren Materialien, wobei die Materialien in dem Extruder vermischt, vielfach plastifiziert und unter hohem Druck aus einer Düse ausgetrieben werden, um die Materialstränge zu erzeugen.

Extruder können grundsätzlich in zwei Arten unterschieden werden, die sich in den Prozessprinzipien unterscheiden. Verarbeitungsextruder dienen hauptsächlich der Formgebung (in der Regel Einwellenextruder), während Aufbereitungsextruder der chemischen und/oder physikalischen Modifizierung (Reagieren, Mischen, Entgasen, etc.) von Stoffen dienen (gleichlaufender dichtkämmender Doppelwellenextruder, Busskneter etc.).

Stopfschnecken (auch Niederhaltewerke genannt) werden als Nebenaggregate an einem Extruder verwendet. Hierbei handelt es sich grundsätzlich um Schneckenförderer. Diese werden hauptsächlich zu zwei Zwecken eingesetzt. Zum einen dienen diese einer Zudosierung eines Produkts oder von Zuschlagstoffen in den Extruder. Zum anderen wird durch Stopfschnecken auch ein Produktaustrag aus dem Extruder an Öffnungen des Extrudergehäuses, die z.B. zur Belüftung oder Entgasung dienen, verhindert.

Bei der Entgasung in einem Extruder müssen die abgetrennten Dämpfe und Gase (sogenannte Brüdenströmung) aus dem Produktraum abgesaugt werden. Dabei herrschen häufig sehr große Gasgeschwindigkeiten. Außerdem entstehen bei der Entgasung im Extruder durch die Expansion und durch ein Aufschäumen des Materials, Produktpartikel. Dieser Effekt tritt besonders bei der Entgasung von stark viskoelastischen Materialien, insbesondere Elastomeren, auf. Die entstehenden Produktpartikel können ein breites Größenspektrum, das regelmäßig von <0,1mm bis zu mehreren Millimetern reichen kann, aufweisen. Bedingt durch die hohen Gasgeschwindigkeiten können die Produktpartikel mit dem Brüdenstrom aus dem Extruder ausgetragen werden. Durch die Verwendung einer Stopfschnecke in der Entgasungsöffnung wird nun zum einen eine Verstopfung der Entgasungsöffnung verhindert. Zum anderen dient die Stopfschnecke dazu, mitgerissene Produktpartikel aus dem Brüdenstrom abzuscheiden. Dadurch sollen stromab liegende Aggregate, wie z.B. Abscheider, Absauganlagen, Vakuumanlagen oder Kondensatsysteme, vor Produktablagerungen geschützt werden. Ein starker Austrag von Produktpartikeln in die stromab liegenden Aggregate würde ansonsten dazu führen, dass z.B. Abscheider häufig gereinigt werden müssen, Vakuumpumpen beschädigt werden oder Kondensatsysteme verstopfen und dadurch einen Wirkungsgradverlust erleiden.

In Versuchen zur Kautschukentgasung hat sich gezeigt, dass eine große Menge von Produktpartikeln trotz der Stopfschnecken ausgetragen wird. Genauere Beobachtungen ergaben, dass, bedingt durch die hohen Gasgeschwindigkeiten in den Gängen der Stopfschnecke, die Produktpartikel nicht an den Profilflanken oder am Gehäuse der Stopfschnecke anhaften, sondern vielmehr von den Wänden zurück geworfen werden. Bei der Behandlung von visko-elastischen Materialien, wie z.B. Kautschuk, wird dieser Effekt durch die hohe Elastizität der Partikel verstärkt. Die Adhäsionskräfte sind dann nicht groß genug, um den Rückpralleffekt zu überwinden.

Ausgehend von diesem Stand der Technik lag der Erfindung die Aufgabe zugrunde, die Funktion einer Stopfschnecke, insbesondere bei der Entgasung in einem Extruder zu verbessern. Insbesondere sollte ein Austrag von Produktpartikeln über die Stopfschnecke verringert werden.

Diese Aufgabe wird durch die Gegenstände der unabhängigen Patentansprüche gelöst. Vorteilhafte Ausführungsformen sind Gegenstand der jeweiligen abhängigen Patentansprüche und ergeben sich aus der nachfolgenden Beschreibung der Erfindung.

Der Erfindung lag der Gedanke zu Grunde, einen Austrag von Produktpartikeln über die Stopfschnecke dadurch zu verringern, dass diese zunächst aus der Brüdenströmung abgeschieden und die abgeschiedenen Produktpartikel dann agglomeriert werden. Danach sollen die agglomerierten Produktpartikel in den Extruder zurückgeführt oder aus dem Extrudersystem sicher, d.h. nicht über die sich an die Stopfschnecke anschließende Entlüftungsanlage, ausgetragen werden.

Erfindungsgemäß wird dieser Grundgedanke der Erfindung umgesetzt, indem eine Stopfschnecke für einen Extruder, die zumindest ein Gehäuse sowie mindestens eine drehbar innerhalb des Gehäuses gelagerte Förderschnecke umfasst, wobei zwischen einer Gehäuseinnenseite und der Förderschnecke ein Förderraum ausgebildet ist, an der Gehäuseinnenseite zumindest in einem Abschnitt mit einer oder (vorzugsweise) mehreren Vertiefungen versehen ist.

Als erfindungsgemäße "Vertiefungen" werden solche angesehen, die einen geschlossenen Grund aufweisen, wodurch sie sich von Öffnungen, wie sie als Funktionsöffnungen auch in konventionellen Stopfschnecken vorhanden sind, abgrenzen.

Die Vertiefungen können eine beliebige Querschnittsform aufweisen und sortiert oder unsortiert in der Gehäuseinnenseite vorgesehen sein.

Die Vertiefungen sorgen dafür, dass an der Gehäuseinnenseite Stagnationszonen mit geringer Gasgeschwindigkeit entstehen. In diesen Stagnationszonen verringert sich die Geschwindigkeit der von dem Gas mitgerissenen Produktpartikel, wodurch eine Ablagerung in der Nut ermöglicht wird. Die Vertiefungen haben ferner den Vorteil, dass die Produktpartikel darin agglomerieren können. Die Agglomerate werden dann nicht mehr von der Gasströmung mitgerissen und können entweder in den Extruder zurück gefördert oder sicher ausgetragen werden.

Besonders bevorzugt ist/sind die Vertiefung(en) in Form von (mindestens) einer Nut ausgebildet.

Unter "Nut" wird erfindungsgemäß eine Vertiefung in der Gehäuseinnenseite verstanden, deren Länge vorzugsweise größer und insbesondere um ein Vielfaches größer als deren Breite ist.

Es kann vorgesehen sein, dass sich die Vertiefungen bzw. die Nut über (im Wesentlichen) der gesamten Länge der Gehäuseinnenseite vorgesehen sind. Es kann jedoch auch vorteilhaft sein, die Vertiefungen bzw. die Nut nur in einem oder mehreren Abschnitten der Gehäuseinnenseite vorzusehen. Die Unterbrechung einer Nut kann für eine weitere Störung der Gasströmung sorgen, die dem Abscheiden von mitgerissenen Produktpartikeln förderlich ist. Die Vertiefungen bzw. mehreren Nuten in den verschiedenen Abschnitten können die gleiche Vertiefungs- bzw. Nutform (Nutverlauf, Nutbreite, Nutquerschnitt) oder aber auch unterschiedlich ausgebildet sein. Bei einer durchgehenden Nut kann ebenso vorgesehen sein, dass die Nutform konstant oder variabel ausgebildet ist.

In einer bevorzugten Ausführungsform der erfindungsgenmäßen Stopfschnecke kann vorgesehen sein, dass die Nut (im Wesentlichen) parallel zu der Längsachse der Stopfschnecke verläuft. Hierbei handelt es sich um eine einfache und daher relativ kostengünstige Umsetzungsmöglichkeit. Ein paralleler Verlauf der Nut kann sich aber auch durch ein besonders gutes Abfördern von in den Nuten gebildeten Agglomeraten auszeichnen.

Besonders bevorzugt kann jedoch vorgesehen sein, dass die Nut spiralförmig verläuft.

Dabei kann dann bevorzugt vorgesehen sein, dass die Steigungsrichtung (Rechtssteigung, Linkssteigung) der Nut der Steigungsrichtung (mindestens) eines spiralförmig verlaufenden Gangs der Förderschnecke entgegengesetzt ist. Dabei kann besonders bevorzugt ein Winkel zwischen der Nut und dem Gang in einem Bereich von 70° bis 110° (bezogen auf die Längsrichtung der Förderschnecke) vorgesehen sein. Dies kann den Vorteil aufweisen, dass eine Hauptströmungsrichtung der Gasströmung in dem Gang (nahezu) senkrecht zu der Nut ist, wodurch ein Abscheiden der Produktpartikel begünstigt wird. Weiterhin kann dadurch die Förderung der Agglomerate aus den Nuten verbessert werden.

Eine alternative Ausführungsform kann vorsehen, dass die Steigungsrichtung des Gangs und der Nut gleich ist. Dadurch verlaufen die Nut und der Gang mehr oder weniger parallel. Diese Anordnung kann, insbesondere in einer Kombination mit einem dreieckigen Querschnitt der Nut, den Vorteil haben, dass Agglomerate aus den Nuten besonders gut heraus gefördert werden, wodurch die Gefahr von "Anbackungen" oder einem langsamen "Zuwachsen" der Nut verringert wird.

Selbstverständlich besteht auch die Möglichkeit, die beiden Alternativen zu kombinieren, wobei dann zumindest zwei spiralförmig verlaufende Nuten vorgesehen sind, die eine entgegengesetzte Steigungsrichtung aufweisen und somit über Kreuz verlaufen. Damit kann eine Kombination der Vorteile der beiden Nutverläufe erreicht werden.

Weiterhin kann vorgesehen sein, dass die Steigung der Nut ungleichförmig, d.h. nicht konstant ist. Bei mindestens zwei spiralförmigen Nuten können auch die Steigungen der einzelnen Nuten sowie deren Windungszahlen unterschiedlich sein.

Die erfindungsgemäße Ausgestaltung einer Stopfschnecke verbessert insbesondere die Abscheidung von Produktpartikeln aus der Gasströmung bei einer Nutzung der Stopfschnecke zur Entgasung eines Extruders eines Extrudersystems, so dass vorzugsweise vorgesehen ist, dass die Stopfschnecke bzw. deren Gehäuse zumindest einen Entgasungsauslass aufweist, an den eine Entgasungsanlage mit den aus dem Stand der Technik bekannten Komponenten angeschlossen werden kann. Jedoch weist die erfindungsgemäße Ausgestaltung der Stopfschnecke auch einen Vorteil bei der Förderung von Material auf, so dass sich diese auch vorteilhaft für einen Einsatz bei der Zudosierung von Material in den Extruder eignet.

Ein erfindungsgemäßes Extrudersystem umfasst zumindest einen Extruder sowie mindestens eine Stopfschnecke wie sie oben beschrieben sind. Der Extruder umfasst dabei zumindest ein Extrudergehäuse sowie (mindestens) eine drehbar in dem Extrudergehäuse gelagerte Extruderschnecke. Die Stopfschnecke schließt sich vorzugsweise in einer Querrichtung und besonders bevorzugt in senkrechter Richtung bezüglich der Längsachse des Extruders an diesen an.

Bei dem Extruder kann es sich um jede bekannte Art von Extrudern, insbesondere Einwellenextruder, Doppelwellenextruder (gleich- oder gegensinnig rotierend, kämmend oder nicht-kämmend), Mehrwellenextruder (z.B. Ringextruder), Planetenwalzenextruder, sowie um Co-Kneter mit axial-oszillierender Welle handeln. Ebenfalls kann es sich hierbei um (auch großvolumige) ein- oder mehrwellige Kneter beliebiger Bauart handeln. Bevorzugt ist jedoch die Ausgestaltung des Extruders als Einwellenextruder oder gleichsinnig drehender Doppelwellenextruder.

Die erfindungsgemäße Stopfschnecke eignet sich insbesondere auch zur Entgasung von in einem Extruder geförderten hoch visko-elastischen Material, insbesondere einem Elastomer (z.B. Kautschuk).

Die Erfindung wird nachfolgend anhand von in den Zeichnungen dargestellten Ausführungsbeispielen näher erläutert.

In den Zeichnungen zeigt:
- Fig. 1:: eine erste Ausführungsform eines erfindungsgemäßen Extrudersystems in einer schematischen Darstellung;
- Fig. 2:: eine zweite Ausführungsform eines erfindungsgemäßen Extrudersystems in einer schematischen Darstellung;
- Fig. 3:: eine dritte Ausführungsform eines erfindungsgemäßen Extrudersystems in einer schematischen Darstellung;
- Fig.4:: verschiedene Möglichkeit zur Integration einer Stopfschnecke in ein erfindungsgemäßes Extrudersystem;
- Fig. 5:: eine erste Nutenform für eine erfindungsgemäße Stopfschnecke;
- Fig. 6:: eine zweite Nutenform für eine erfindungsgemäße Stopfschnecke;
- Fig. 7:: eine dritte Nutenform für eine erfindungsgemäße Stopfschnecke;
- Fig. 8:: eine vierte Nutenform für eine erfindungsgemäße Stopfschnecke;
- Fig. 9:: eine fünfte Nutenform für eine erfindungsgemäße Stopfschnecke;
- Fig. 10:: einen ersten Nutenverlauf für eine erfindungsgemäße Stopfschnecke;
- Fig. 11:: einen zweiten Nutenverlauf für eine erfindungsgemäße Stopfschnecke;
- Fig. 12:: einen dritten Nutenverlauf für eine erfindungsgemäße Stopfschnecke; und
- Fig. 13:: einen vierten Nutenverlauf für eine erfindungsgemäße Stopfschnecke.

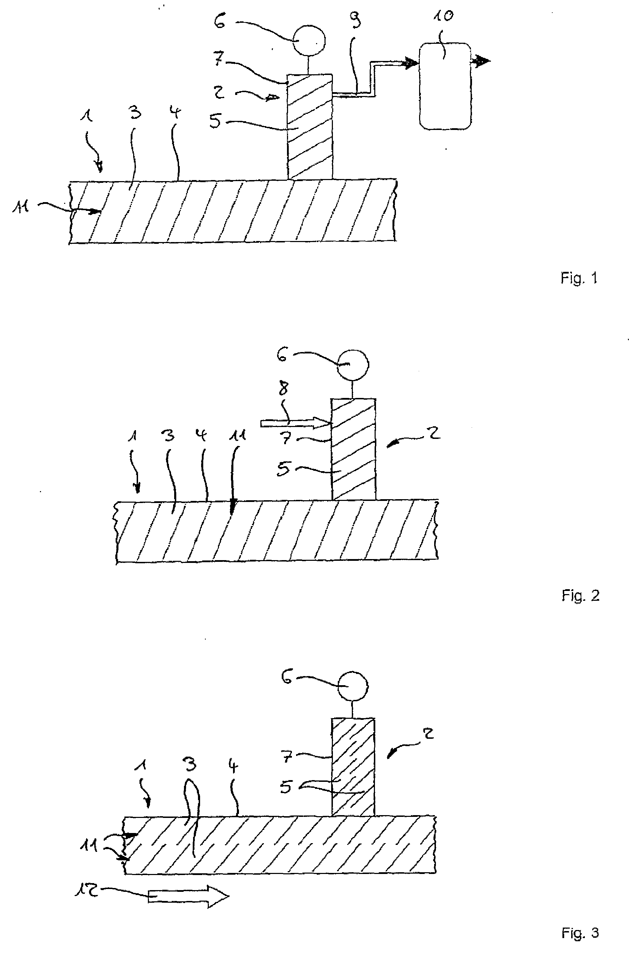

Ein erfindungsgemäßes Extrudersystem weist einen Extruder 1 sowie mindestens eine daran angeschlossene Stopfschnecke 2 auf. Der Extruder 1 umfasst eine Extruderschnecke 3, die von einem nicht dargestellten Antrieb rotierend angetrieben in einem Extrudergehäuse 4 gelagert ist. Die Stopfschnecke 2 umfasst eine Förderschnecke 5, die von einem Antrieb 6 rotierend angetrieben in einem Gehäuse 7 gelagert ist. Der Extruder 1 kann beispielsweise eine einzelne Extruderschnecke 3 und die Stopfschnecke 2 eine einzelne Förderschnecke 5 aufweisen, wie dies beispielhaft in den Fig. 1 und 2 dargestellt ist. Ebenso besteht die Möglichkeit, den Extruder 1 mit einer Mehrzahl von Extruderschnecken 3 und die Stopfschnecke 2 mit einer Mehrzahl von Förderschnecken 5 auszubilden. Fig. 3 zeigt beispielhaft die Ausgestaltung eines erfindungsgemäßen Extrudersystems mit zwei Extruderschnecken 3 und zwei Förderschnecken 5. Bei Ausgestaltungen mit mehr als einer Förderschnecke 5 sind erfindungsgemäß gleich- oder gegensinnig rotierende, dichtkämmende Ausführungen bevorzugt.

Die Stopfschnecke 2 eines erfindungsgemäßen Extrudersystems kann als Zuführorgan vorgesehen sein, über das ein Produkt und/oder ein oder mehrere Zuschlagstoffe dem sich bereits in dem Extruder 1 befindlichen Produkt zugeführt wird. Die Fig. 2 zeigt beispielhaft eine entsprechende Ausgestaltung eines erfindungsgemäßen Extrudersystems mit einem Einlass 8 in einem Gehäuse 7 der Stopfschnecke 2, über den das Produkt zugeführt wird.

Die Stopfschnecke 2 kann auch für die Entgasung des Extruders 1 vorgesehen sein (vgl. Fig. 1). In diesem Fall ist das Gehäuse 7 der Stopfschnecke mit einem Auslass 9 zum Anschluss einer Absauganlage 10 versehen.

In dem zwischen der/den Extruderschnecke(n) 3 und dem Extrudergehäuse 4 ausgebildeten ringförmigen Produktraum wird das Produkt durch die Rotation der mit spiralförmig verlaufenden Gängen 11 ausgebildeten Extruderschnecke(n) 3 in der durch den Pfeil 12 gekennzeichneten Richtung transportiert, dabei ggf. gemischt,plastifiziert und verdichtet. Das Innenvolumen des Extrudergehäuses 4 und das Innenvolumen des Gehäuses 7 der Stopfschnecke 2 sind miteinander verbunden, so dass ein über die Stopfschnecke 2 zugeführtes Produkt in den Extruder 1 eingebracht werden kann bzw. Gas, das sich in dem Extruder 1 gebildet hat, über die Stopfschnecke 2 abgeführt werden kann.

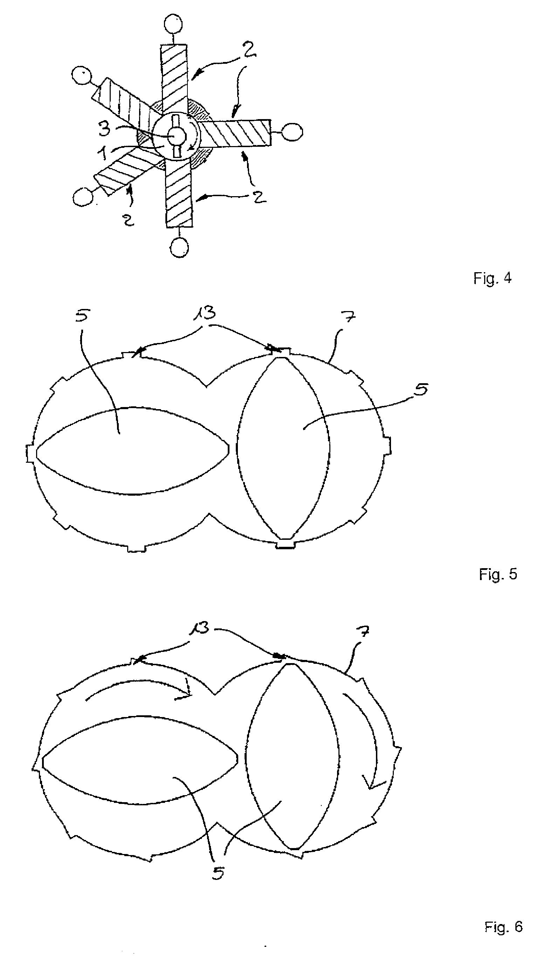

Die Stopfschnecke 2 kann in beliebiger Ausrichtung an den Extruder 1 angeschlossen werden. Fig. 4 zeigt verschiedene Ausrichtungen für die Stopfschnecken 2. Neben vertikal nach unten oder oben sowie horizontal (nach rechts oder links) ist auch eine Ausrichtung schräg nach oben oder schräg nach unten möglich (jeweils bezogen auf die Gravitationsrichtung). Bevorzugt sind horizontale oder vertikale (insbesondere nach oben) Anordnungen. Die Fig. 1 bis 3 zeigen Ausführungen, bei denen die Stopfschnecke 2 jeweils senkrecht bezüglich der Längsachse des Extruders 1 angeordnet ist. Alternativ dazu besteht selbstverständlich auch die Möglichkeit, die Stopfschnecke 2 derart an den Extruder 1 anzuschließen, dass deren Längsachse einen Winkel mit der Längsachse des Extruders 1 einschließt, der nicht 90°, sondern zwischen 0° und <90° und beispielsweise 45° beträgt.

Sollen mehrere Stopfschnecken 2 an einem Extruder 1 kombiniert werden, so können diese an unterschiedlicher axialer Position bezüglich der Längsachse des Extruders 1 vorgesehen werden. Auch ist es möglich, an einer axialen Position des Extruders 1 mehrere Stopfschnecken 2 in unterschiedlicher radialer Ausrichtung anzuordnen (vgl. Fig. 4), um z.B. die zur Verfügung stehenden freien Strömungsquerschnitte zu vergrößern.

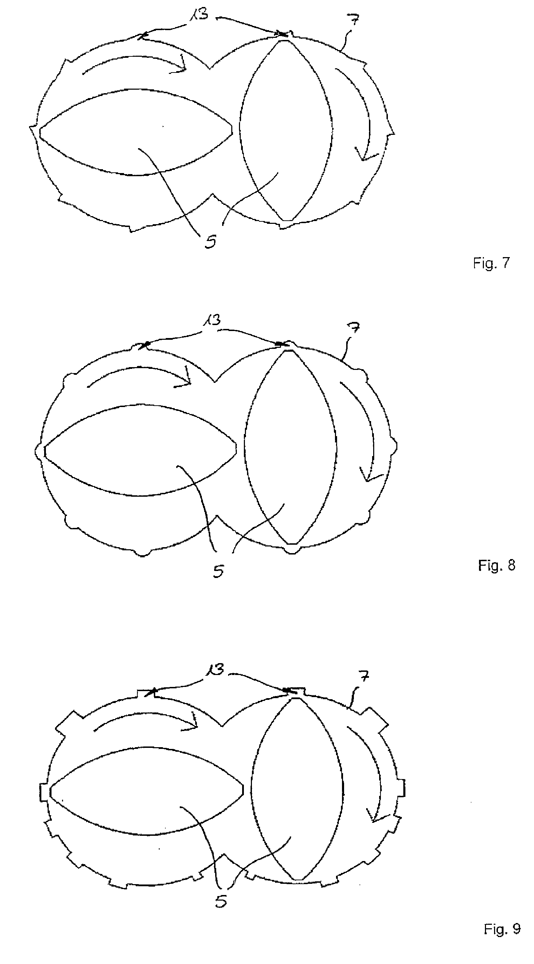

Die Fig. 5 bis 9 zeigen schematisch unterschiedliche Querschnitte, mit denen die Nuten 13 erfindungsgemäßer Stopfschnecken 2 (dort beispielhaft mit zwei Förderschnecken 5 mit gleicher Drehrichtung) ausgeführt werden können. Dabei zeigt die Fig. 5 eine rechteckige und die Fig. 6 und 7 dreieckige Querschnitte der Nuten 13. Die dreieckigen Querschnitte sind nicht gleichschenkelig, wobei bei der Ausführungsform der Fig. 6 der längere, flacher verlaufende Schenkel in Drehrichtung der Förderschnecken 5 hinten liegt ("in Drehrichtung auslaufend") liegt, während bei der Ausführungsform der Fig. 7 der kürzere, steiler verlaufende Schenkel in Drehrichtung der Förderschnecken 5 hinten liegt ("in Drehrichtung abfallend"). Selbstverständlich besteht auch die Möglichkeit, den dreieckigen Querschnitt der Nuten 13 gleichschenkelig oder gleichseitig auszubilden. Der Querschnitt der Nuten 13 bei der Ausführungsform der Fig. 8 ist bogen- und insbesondere teilkreisförmig. Die Fig. 9 verdeutlicht zudem noch die Möglichkeit, die Nuten 13 mit unregelmäßiger Teilung und/oder ungleichförmigem Querschnitt (hinsichtlich der Abmessungen und/oder hinsichtlich der Querschnittform) auszubilden.

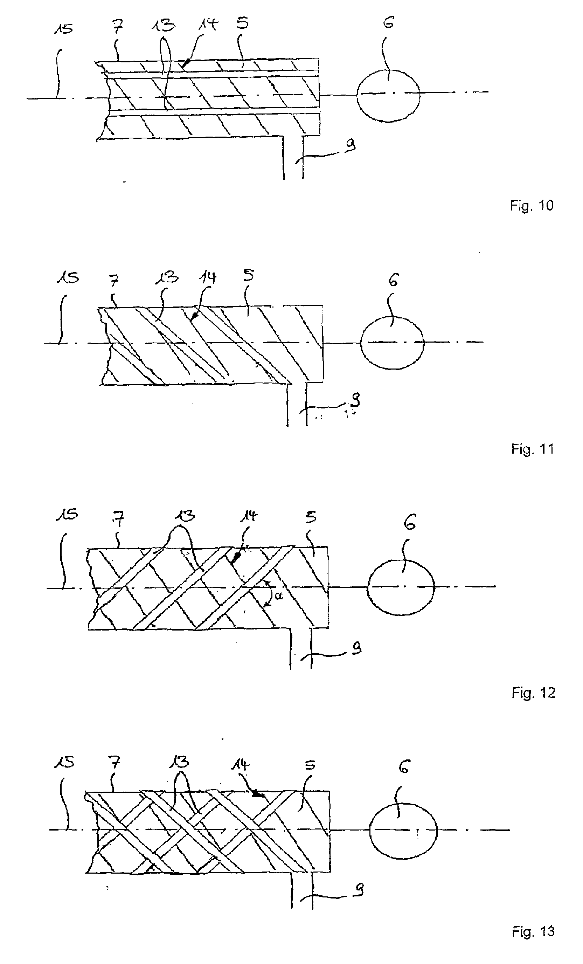

Die Fig. 10 bis 13 zeigen verschiedene Möglichkeiten für den Verlauf von Nuten 13 erfindungsgemäßer Stopfschnecken 2. Bei der Ausführungsform der Fig. 10 ist eine parallele Ausrichtung der Nuten 13 zu der Längsachse 15 der Stopfschnecke 2 bzw. der Förderschnecke 5 vorgesehen. Hierbei handelt es sich um eine einfache und daher technisch kostengünstige Lösung. Die parallele Anordnung kann sich, insbesondere bei einer Kombination mit der Nutenform gemäß der Fig. 6, aber auch durch ein besonders gutes Abfördern von in den Nuten 13 gebildeten Agglomeraten auszeichnen. Dadurch kann die Gefahr von "Anbackungen" in den Nuten 13 oder einem langsamen "Zuwachsen" der Nuten 13 verringert werden.

Bei der Ausführungsform der Fig. 11 verlaufen die Nuten 13 der Stopfschnecke 2 spiralförmig, und zwar mit der gleichen Steigungsrichtung (rechtssteigend) wie die ebenfalls spiralförmig verlaufenden Gänge 14 der Förderschnecke 5. Die Nuten 13 und die Gänge 14 verlaufen somit mehr oder weniger parallel.

Im Gegensatz dazu ist bei der Ausführungsform der Fig. 12 vorgesehen, dass die spiralförmig verlaufenden Nuten 13 eine den Gängen 14 der Förderschnecke 5 entgegengesetzte Steigungsrichtung aufweisen. Dabei ist vorzugsweise vorgesehen, dass der Winkel α, den die Nuten 13 und die Gänge 14 über der Längsachse 15 der Stopfschnecke 2 einschließt, in einem Bereich zwischen 70° und 110° liegt.

Die Fig. 13 zeigt schließlich noch eine Kombination von sich infolge entgegengesetzter Steigungsrichtungen kreuzender Nuten 13.

### Bezugszeichenliste

- 1: Extruder
- 2: Stopfschnecke
- 3: Extruderschnecke
- 4: Extrudergehäuse
- 5: Förderschnecke
- 6: Antrieb
- 7: Gehäuse
- 8: Einlass
- 9: Auslass
- 10: Absauganlage
- 11: Gang
- 12: Transportrichtung
- 13: Nut
- 14: Gang
- 15: Längsachse

## Patentansprüche

1. Stopfschnecke (2) mit einem Gehäuse (7) sowie zumindest einer drehbar innerhalb des Gehäuses (7) gelagerten Förderschnecke (5), wobei zwischen einer Innenseite des Gehäuses (7) und der Förderschnecke (5) ein Förderraum ausgebildet ist, **dadurch gekennzeichnet, dass** die Innenseite des Gehäuses (7) zumindest in einem Abschnitt mit einer oder mehreren Vertiefungen versehen ist.

2. Stopfschnecke (2) gemäß Anspruch 1, **dadurch gekennzeichnet, dass** die Vertiefungen in Form von zumindest einer Nut (13) ausgebildet sind.

3. Stopfschnecke (2) gemäß Anspruch 1 oder 2, **dadurch gekennzeichnet, dass** mindestens zwei in Richtung der Längsachse der Förderschnecke (5) voneinander beabstandete Abschnitte der Innenseite des Gehäuses (7) mit Vertiefungen und insbesondere jeweils mindestens einer Nut (13) versehen sind.

4. Stopfschnecke (2) gemäß Anspruch 2 oder 3, **dadurch gekennzeichnet, dass** die Nut (13) parallel zu der Längsachse der Förderschnecke verläuft.

5. Stopfschnecke (2) gemäß Anspruch 2 oder 3, **dadurch gekennzeichnet, dass** die Nut (13) spiralförmig verläuft.

6. Stopfschnecke (2) gemäß Anspruch 5, **dadurch gekennzeichnet, dass** die Förderschnecke (5) zumindest einen spiralförmig verlaufenden Gang (14) aufweist und dass die Steigungsrichtung des Gangs (14) der Steigungsrichtung der Nut (13) entgegengesetzt ist.

7. Stopfschnecke (2) gemäß Anspruch 6, **dadurch gekennzeichnet, dass** die Nut (13) mit dem Gang (14) in Richtung der Längsachse (15) der Förderschnecke (5) einen Winkel (α) von 70° bis 110° einschließt.

8. Stopfschnecke (2) gemäß Anspruch 5, **dadurch gekennzeichnet, dass** die Förderschnecke (5) zumindest einen spiralförmig verlaufenden Gang (14) aufweist und dass die Steigungsrichtung des Gangs (14) und die Steigungsrichtung der Nut (14) gleich ist.

9. Stopfschnecke (2) gemäß einem der Ansprüche 5 bis 8, **dadurch gekennzeichnet, dass** die Steigung der spiralförmig verlaufenden Nut (13) ungleichförmig ist.

10. Stopfschnecke (2) gemäß einem der Ansprüche 5 bis 9, **gekennzeichnet durch** mehrere spiralförmig verlaufende Nuten (13), deren Steigungsrichtung, Steigung und/oder Windungsanzahl unterschiedlich ist.

11. Stopfschnecke (2) gemäß einem der vorhergehenden Ansprüche, **gekennzeichnet durch** einen Entgasungsauslass.

12. Extrudersystem mit einem Extruder (1) und einer Stopfschnecke (2) gemäß einem der vorhergehenden Ansprüche.

13. Verwendung einer Stopfschnecke (2) gemäß Anspruch 11 zur Entgasung von in einem Extruder (1) geförderten visko-elastischen Material, insbesondere einem Elastomer.

14. Verfahren zur Entgasung von in einem Extruder geförderten visko-elastischen Material, insbesondere einem Elastomer, **dadurch gekennzeichnet, dass** die Entgasung in einem Extrudersystem nach Anspruch 12 erfolgt.
